# EUROPÄISCHE PATENTSCHRIFT

(11) **EP 0 684 960 B1**
(45) Veröffentlichungstag und Bekanntmachung des Hinweises auf die Patenterteilung: **05.08.1998**
(21) Anmeldenummer: 94907538.6
(22) Anmeldetag: 10.02.1994
(51) Int. Cl.: C08G 18/10, C08J 9/00, C09K 3/30

(54) **PREPOLYMERZUSAMMENSETZUNG FÜR DÄMMSCHÄUME**
PREPOLYMER COMPOSITION FOR INSULATING FOAMS
COMPOSITION PREPOLYMERE POUR MOUSSES ISOLANTES

(30) Priorität: 10.02.1993 DE 4303849; 10.02.1993 DE 4303848
(43) Veröffentlichungstag der Anmeldung: 06.12.1995
(73) Patentinhaber: RATHOR AG, 9050 Appenzell (CH)
(72) Erfinder: PAULS, Mathias, CH-9050 Appenzell (CH); SCHUMACHER, René, CH-9403 Goldach (CH); SOMMER, Heiner Dr, 9050 Appenzell (CH)
(74) Vertreter: Thiel, Christian, Dr. Dipl.-Chem.
(86) Internationale Anmeldenummer: EP9400384
(87) Internationale Veröffentlichungsnummer: WO9418256

(56) Entgegenhaltungen:
- EP-A- 0 118 171
- EP-A- 0 462 438
- EP-A- 0 480 342
- EP-A- 0 546 399
- DE-A- 4 025 843
- DE-C- 3 837 351

## Beschreibung

Die Erfindung betrifft eine Prepolymerzusammensetzung zur Erzeugung von Polyurethandämmschäumen aus Druckbehältern, welche aus einer Prepolymerkomponente mit wenigstens einem PU-Prepolymer, erhalten durch Unsetzung von Polyisocyanaten mit hydroxylgruppenhaltigen Verbindungen, mit einem Gehalt an NCO-Gruppen von 4 bis 20 Gew.-% und üblichen Zusatzstoffen sowie einer Treibgaskomponente besteht. Die Erfindung betrifft ferner die Verwendung von solchen Prepolymerzusammensetzungen für die Herstellung von Druckdosen-Polyurethandämmschäumen sowie Druckdosen mit einer solchen Prepolymerzusammensetzung und gegebenenfalls einer davon getrennten Polyolkomponente zur Erzeugung von Polyurethandämmschäumen.

Die erfindungsgemäße Prepolymerzusammensetzung dient zur Erzeugung von Polyurethandämmschäumen, die vor allem zum Ausschäumen von Hohlräumen eingesetzt werden. Hauptsächliche Anwendungsgebiete sind das Bauwesen, aber auch technische Produkte, bei denen Hohlräume zur Vermeidung von Schwitzwassernestern verfüllt werden müssen. Soweit Einkomponenten-Polyurethanschäume angesprochen sind, werden diese durch Ausbringen der Prepolymerzusammensetzung aus Druckbehältern, beispielsweise Aerosoldosen, mit Hilfe von Treibmitteln an Ort und Stelle mit einem Raumgewicht von 10 bis 50 g/l ausgebracht und verarbeitet. 1K-Schäume sind feuchtigkeitshärtend, d. h. sie können allein mit Hilfe der in der Luft enthaltenden Feuchtigkeit aushärten.

Zweikomponenten-Polyurethanschäume benötigen zum Aushärten der Prepolymerzusammensetzung eine zweite hydroxylhaltige Komponente, in der Regel ein Polyol, das unmittelbar vor der Schaumbildung zugesetzt werden muß. Die Aushärtung kann durch Katalysatoren beschleunigt werden. Raumgewichte bei 2K-Schäumen liegen typischerweise bei 10 bis 100 g/l.

Übergangsformen zwischen 1K- und 2K-Schäumen sind möglich. In diesem Fall wird dem Prepolymer vor dem Ausbringen eine zur Umsetzung der Isocyanatgruppen nicht ausreichende Menge einer Hydroxylkomponente zugesetzt. Für diese Übergangsformen hat sich die Bezeichnung "1,5K-Schäume" ausgebildet. Erfaßt werden auch Schaumbildner mit mehr als einer separaten reaktiven Komponente.

Herkömmliche Prepolymerzusammensetzungen für Polyurethandämmschäume enthalten eine Prepolymerkomponente, die einen Mindestgehalt an reaktiven NCO-Gruppen aufweisen. Das Prepolymer selbst ist ein Polymer geeigneter Viskosität mit endständigen NCO-Gruppen. Die Zusammensetzung enthält eine mehr oder weniger große Menge an monomerem Isocyanat. Geeignete Isocyanate sind beispielsweise Isophorondiisocyanat, auch als IPDI bezeichnet, Tolylendiisocyanat, auch als TDI bezeichnet, Diisocyanatotoluol, 1,5-Diisocyanatonaphthalin, als NDI bezeichnet, Triisocyanatotrimethylmethan, 1,6-Diisocyanatohexan, als HDI bezeichnet, oder 4,4-Diisocyanatodiphenylmethan in roher und reiner Form oder als Gemisch. Besonders gebräuchlich ist 4,4-Diisocyanatodiphenylmethan, auch als MDI bezeichnet, das sowohl in roher Form (Roh-MDI) als auch in Form der reinen 2,4- und 4,4-Isomeren oder von deren Mischungen verwandt wird. Ebenso können die beiden gebräuchlichen TDI-Isomeren allein oder in Abmischung eingesetzt werden. Zur Herstellung der Prepolymerkomponente werden solche Isocyanate mit hydroxylgruppenhaltigen Polyethern, Polyestern oder mehrwertigen Alkoholen umgesetzt, wobei darauf geachtet wird, daß das Prepolymer eine für die Zusammensetzung geeignete Viskosität erhält.

Wie bereits angesprochen, enthalten zur Herstellung von Polyurethandämmschäumen aus Druckbehältern geeignete PU-Prepolymere einen Restgehalt an nicht umgesetztem momomerem Isocyanat, der bis zu 40 % betragen kann. Dieser Restgehalt ist zumeist herstellungsbedingt, aber auch erwünscht, da es sich gezeigt hat, daß sich dieser Restgehalt positiv auf die Gebrauchsfähigkeit, insbesondere die Form- und Dimensionsstabilität der damit erzeugten Schäume auswirkt. Andererseits gelten monomere Isocyanate, trotz ihrer in der Regel recht niedrigen Flüchtigkeit, wegen ihrer Toxizität als kennzeichnungspflichtige Gefahrenstoffe. Für MDI, das bevorzugte Ausgangsisocyanat für 1K-Schäume, gilt ein MAK-Wert von 0,01 ppm, ebenso für HDI. Wegen der Toxizität der Inhaltsstoffe unterliegen Emballagen, die Rückstände dieser Prepolymere enthalten, kostenträchtigen Beschränkungen bei der Entsorgung.

Zwar ist es möglich, Prepolymere mit niedrigen Restmonomergehalten herzustellen, jedoch hat die geringe Gebrauchs fähigkeit daraus hergestellter Schäume den Einsatz solcher Prepolymerzusammensetzungen bislang verhindert. Applikationsfähige Polymerzusammensetzungen für Druckdosen sind nicht bekannt geworden. Allgemein ging man davon aus, daß monomerfreie Einstellungen in Druckdosen nicht einsatzfähig sind. Monomerfreie Prepolymere können beispielsweise durch Entzug des Monomeren durch Destillation und ggf. weitere Umsetzung mit einem reaktiven hydroxylgruppenhaltigen Polyether und/oder Polyester und/oder Pflanzenöl, modifiziert wie unmodifiziert, hergestellt werden.

Aus EP-A-0 420 026 ist ein Verfahren zur Herstellung von monomerarm eingestelltem Polyurethan-Prepolymer auf Basis Tolylendiisocyanat beschrieben. DE-A-40 25 843 wie EP-A-0 480 342 beschreiben Prepolymerzusammensetzungen zur Herstellung von Polyurethandämmschäumen aus Druckbehältern, welche aus einer Prepolymerkomponente mit wenigstens einem PU-Prepolymer mit freien NCO-Gruppen und üblichen Zusatzstoffen sowie einer Treibgaskomponente bestehen. Monomerarm eingestellte Prepolymerkomponenten werden danach nicht eingesetzt.

EP-A-0 684 968 und 0 683 805 behandeln weitere Aspekte der hier beanspruchten Erfindung.

Angesichts der Nachteile bislang bekannter monomeres Isocyanat enthaltender PU-Prepolymerer wäre es wünschenswert, ein PU-Prepolymer bereitzustellen, das wenig oder im wesentlichen kein monomeres Isocyanat mehr enthält und trotzdem die vor allem von der Bauindustrie verlangten Eigenschaften, etwa die Dimensionsstabilität des Schaums, gewährleistet. Insbesondere ist es Ziel der Erfindung, eine Prepolymerzusammensetzung für dimensionsstabile 1,5K-PU-Schäume bereitzustellen, die toxische und/oder reizende Bestandteile in nur noch solch geringen Mengen enthält, daß sie nicht mehr kennzeichnungspflichtig sind.

Des weiteren besteht ein Bedarf an die Dimensionsstabilität von Dämmschäumen fördernden Zusätzen, die sowohl bei monomerhaltigen wie monomerarmen und monomerfreien Prepolymeren eingesetzt werden können.

Erfindungsgemäß wird eine Prepolymerzusammensetzung der eingangs bezeichneten Art bereitgestellt, die auf der Verwendung eines Pu-Prepolymers auf Basis von Hexamethylen-1,6-diisocyanat, Tolylen diisocyanat oder Isophorondiisocyanat, allein, in Mischung oder in Abmischung mit anderen Polyisocyanaten, wobei der Gehalt an monomerem Isocyanat weniger als 2 Gew.-%, bezogen auf die Prepolymerkomponente, beträgt, beruht. Überraschend werden damit einsatzfähige Mischungen erzielt.

Für die Herstellung der erfindungsgemäß zum Einsatz kommenden Prepolymerzusammensetzung werden HDI, TDI und IPDI, also übliche aliphatische und aromatische Polyisocyanate verwandt. Insbesondere werden dazu mehrfunktionelle Isocyanate mit dem Mittel 2 bis 4 Isocyanatgruppen eingesetzt, sowohl in monomerer als auch oligomerer Form. Wie eingangs festgehalten, sind diese Prepolymerzusammensetzungen selbst Reaktionsprodukte aus isocyanatgruppenhaltigen Monomeren oder Oligomeren und damit reaktiven Komponenten, insbesondere hydroxyfunktionellen Verbindungen. Geeignete Ausgangsisocyanate sind beispielsweise in der DE-A-42 15 467 genannt.

Erfindungsgemäß geeignet für diese Prepolymerzusammensetzungen sind Isocyanat-Prepolymere auf Basis von HDI, dimerem oder trimerem TDI und IPDI, die sich besonders einfach in im wesentlichen monomerfreie Prepolymere überführen lassen. Ferner sind besonders geeignet biuretgruppenhaltige Polyisocyanate (Desmodur N mit 22 % NCO-Gehalt, ggf. nach Herabsetzung des NCO-Gehalts durch Verdünnung) und Polyaddukte von TDI mit Polyolen, insbesondere Trimethylolpropan (Desmodur L mit 13 % NCO), die im wesentlichen monomerfrei eingestellt sind. Weitere geeignete Isocyanattypen sind die Handelsprodukte Desmodur Z 4370 und E 3265.

Der NCO-Gehalt im zum Einsatz kommenden Prepolymer liegt zwischen 4 und 20 Gew.-%, vorzugsweise zwischen 6 und 18 Gew.-% und insbesondere zwischen 7 und 13 Gew.-%.

Bei der Herstellung der Isocyanat-Prepolymere kommen hierfür übliche hydroxylgruppenhaltige Komponenten zum Einsatz, beispielsweise Polyether, Polyester oder auch modifizierte Pflanzenöle mit einer ausreichenden OH-Zahl, etwa im Bereich von 100 bis 300. Ricinusöl, etwa mit einer OH-Zahl von 160, ist geeignet, ebenso übliche Glykole, insbesondere Polyethylenglykole.

Das monomerreduzierte Prepolymer selbst ist beispielsweise durch Entzug des Monomeren in einem Dünnschichtverdampfer erhältlich. Alternativ oder zusätzlich kann (verbliebenes) Isocyanatmonomer mit einem hydroxylgruppenhaltigen Polyether und/oder Polyester und/oder modifiziertes Pflanzenöl umgesetzt werden. Geeignete Pflanzenöle sind solche mit einer OH-Zahl von 100 bis 300, beispielsweise Ricinusöl mit einer OH-Zahl von etwa 160. Erfindungsgemäß ist es ohne weiteres möglich, mit solcherart monomerreduzierten Prepolymerkomponenten stabile Schäume zu erzielen, sofern das Polybutadien zugesetzt wird. Als monomerarm wird eine Prepolymerzusammensetzung mit weniger als 10 % Monomer, insbesondere weniger als 5 % Monomer bezeichnet, als im wesentlichen monomerfrei ein solches mit weniger als 2, vorzugsweise weniger als 1 und insbesondere weniger als 0,5 Gew.-% Monomer, jeweils bezogen auf die Prepolymerkomponente, d. h. die in der Zusammensetzung vorliegende reaktive isocyanathaltige Komponente.

Als besonders geeignet für erfindungsgemäße Schäume, insbesondere 1,5K-Schäume, haben sich Ausgangs-Prepolymere auf HDI-Basis gezeigt, wie sie beispielsweise von der Firma Bayer unter der Bezeichnung des Desmodur DA und N 3400 angeboten werden, ferner Desmodur N 3200 und N 3390. Diese weisen einen Restgehalt an monomerem HDI von weniger als 0,5 Gew.-% auf. Desmodur N ist ein dimeres HDI. Diese Materialien sind bislang bei der Schaumherstellung aus Druckdosen nicht zum Einsatz gekommen.

Das Prepolymer kann übliche Zusatzstoffe enthalten, wie beispielsweise Polysiloxane zur Steuerung der Zellöffnung, Flammschutzmittel, Weichmacher, Katalysatoren, Viskositätsregulierer, etwa Propylencarbonat, Triethylphosphat und Diphenylkresylphosphat in Mengen bis zu 40 Gew.-%, bezogen auf die Prepolymerkomponente, Farbstoffe, rheologiesteuernde Zusätze und dergleichen. Zweckmäßigerweise hat die Prepolymerzusammensetzung, d. h. das PU-Prepolymer einschließlich aller Zusätze ohne Treibgase, eine Anfangs-Gebrauchsviskosität bei 20° C von 5000 bis 20000 mPa.s und vorzugsweise von 8000 bis 15000 mPa.s. Erfindungsgemäß liegt der Gehalt an NCO-Gruppen im PU-Prepolymer bei 4 bis 20 Gew.-%, vorzugsweise bei 6 bis 18 Gew.-% und insbesondere bei 7 bis 13 Gew.-%, jeweils bezogen auf das Prepolymer.

Alternativ oder ergänzend kann einer Schrumpfungstendenz von linearen Schaumsystemen durch Zusatz sogenannter Zellöffner entgegengewirkt werden. Hierbei handelt es sich vor allem um Paraffinöle einer Dichte von 0,81 bis 0,9 g/ml und einer Viskosität von 20 bis 300 mPas/20° C oder um silikonfreie Polymere auf Polyvinylalkyletherbasis mit schaumzerstörender Wirkung, wie sie von der Firma BYK-Chemie GmbH unter den Bezeichnungen Byk-051, -052 und -053 für Lacksysteme angewandt werden. Diese Zusätze werden in Mengen von 0,01 bis 2, vorzugsweise 0,1 bis 1 Gew.-%, bezogen auf die Prepolymerkomponente, zugesetzt. Es hat sich überraschend gezeigt, daß gerade entschäumende Zusätze der Schrumpfungstendenz von Polyurethan-Bauschäumen entgegenwirken können.

Alternativ oder ergänzend hierzu kann ein mechanischer Stabilisierungseffekt durch eingebaute mineralische Feststoffe erzielt werden, beispielsweise durch Talke, Kalziumcarbonate, etc. In diesem Fall sind zur Verhinderung von Sedimentationserscheinungen tensidische Benetzungsadditive vorteilhaft. Ebenso können im Zusammenhang damit die Rheologie fördernde Zusätze verwandt werden, beispielsweise hydrophile, koloidale Kieselsäure, wie sie unter der Bezeichnung Aerosil erhältlich ist.

Durch den Zusatz einer geringen Menge an Polybutadien ist es möglich, die Dimensionsstabilität monomerarmer und -freier PU-Prepolymere zu erhöhen und ein voll verschäumbares dimensionsstabiles Dämmaterial zu erhalten. Das Polybutadien kann in Verbindung mit PU-Prepolymeren aus allen üblichen Isocyanaten eingesetzt werden, ist jedoch besonders vorteilhaft in Verbindung mit PU-Prepolymeren auf HDI- und MDI-Basis.

Als geeignete Polybutadiene können insbesondere flüssige Produkte eingesetzt werden, wie sie von der Firma Hüls AG mit einer Viskosität von wenigstens 500 mPa.s bei 20° C angeboten werden. Vorzugsweise beträgt die Viskosität wenigstens 2000 mPa.s bei 20° C und insbesondere etwa 3000 mPa.s bei 20° C. Besonders geeignet ist ein unter der Bezeichnung Polyöl 130 vertriebenes flüssiges Polybutadien mit etwa 75 % 1,4-cis-Doppelbindungen, etwa 24 % 1,4-trans-Doppelbindungen und etwa 1 % Vinyl-Doppelbindungen und einem Molekulargewicht (dampfdruckosmotisch) von etwa 3000. Der Gehalt an flüssigem Polybutadien beträgt erfindungsgemäß 0,01 bis 2 Gew.-% und vorzugsweise 0,05 bis 1 Gew.-%, jeweils bezogen auf die Prepolymerkomponente, der es zugemischt wird.

Geeignete Polybutadiene sind ferner solche Produkte höheren Molekulargewichts, die der Prepolymerzusammensetzung in gelöster Form zugesetzt werden können oder darin in Lösung gebracht werden können. Außerdem können höher molekulare polymere Kohlenwasserstoffe verwandt werden, die Doppelbindungen enthalten.

Das Molekulargewicht geeigneter stabilisierender Zusätze beträgt zweckmäßigerweise 1000 bis 9000, insbesondere bis 5000.

Neben reinem (flüssigem) Polybutadien können auch Copolymere von 1,3-Butadien mit anderen 1,3-Dienen verwandt werden, wie beispielsweise Isopren, 2,3-Dimethylbutadien und Piperylen, wie auch mit vinylaromatischen Verbindungen, etwa Styrol, α-Methylstyrol, Vinyltoluol und Divinylbenzol. Der Gehalt an Comonomeren in den Copolymerisaten soll 50 Mol-% nicht überschreiten. Derartige Copolymerisate werden, sofern sie flüssig oder löslich sind, als unter die Bezeichnung "(flüssiges) Polybutadien" fallend angesehen.

Es wird angenommen, daß die dimensionsstabilisierende Wirkung des Polybutadiens auf dessen Fähigkeit zur Vernetzung in Gegenwart von Sauerstoff beruht.

Die erfindungsgemäße Prepolymerzusammensetzung enthält insbesondere Propan, Butan und/oder Dimethylether als Treibgaskomponente. Als weitere Treibgase in der Komponente kommen Fluorkohlenwasserstoffe in Frage, die unter den in einem Druckbehälter herrschenden Druckbedingungen verflüssigbar sind, beispielsweise R 125, R 134a, R 143 und R 152a. Um den Anteil an brennbaren und halogenhaltigen Treibgasen niedrig zu halten, können weitere Gase zugesetzt werden, die unter den in der Druckdose herrschenden Druckbedingungen nicht kondensierbar sind, beispielsweise CO₂, N₂O oder N₂. Hiervon ist insbesondere CO₂ bevorzugt, da es sich z. T. in der Prepolymerkomponente lösen und dadurch zur Schaumbildung beitragen kann, daneben aber auch als gutes Treibmittel wirkt.

Der Treibgaskomponente der Prepolymerzusammensetzung macht zweckmäßigerweise 5 bis 40 Gew.-% aus. Der CO₂-Gehalt im Treibgas kann beispielsweise etwa 5 Gew.-%, bezogen auf die gesamte Treibgaskomponente, betragen. Der Gehalt an unter den herrschenden Druckbedingungen nicht kondensierbaren Gasen sollte so bemessen sein, daß das auf den Leerraum des Druckbehälters bezogene Volumen einen Druck von etwa 8 bis 10 bar ergibt, je nach der einschlägigen nationalen Vorschrift für Druckbehälter (Aerosoldosen). Der Leerraum des Druckbehälters ist der Raum, der von den nicht kondensierten Bestandteilen der Prepolymerzusammensetzung eingenommen wird.

Das flüssige Butadien wird zweckmäßigerweise der Prepolymerzusammensetzung in Lösung zusammen mit einem Emulgator - beispielsweise in einem Gewichtsverhältnis 80/20 - zugesetzt, vorzugsweise in Lösung mit einem hydroxylgruppenhaltigen Pflanzenöl, das geeignet ist, den Isocyanatgehalt des PU-Prepolymers zu steuern. Als hierfür besonders geeignet hat sich Ricinusöl mit einer OH-Zahl von 160 erwiesen, jedoch können beliebige andere hydroxylgruppenhaltige Pflanzenöle wie auch hydroxylgruppenhaltige Polyether und Polyester eingesetzt werden. Es handelt sich dabei um hydroxylgruppenhaltige Komponenten, wie sie üblicherweise bei der Formulierung von Prepolymerzusammensetzungen zur Modifizierung der Viskosität verwandt werden. Die Zugabe der anderen dimensionsstabilisierenden Zusätze kann entsprechend erfolgen.

Die erfindungsgemäßen Prepolymerzusammensetzungen können vor allem als 1,5K-, aber auch als 1K- und als 2K-Polyurethanschaummaterialien eingesetzt werden. Bei 1,5K- und 2K-Schäumen wird die zur Aushärtung des Schaums benötigte Polyolkomponente in bekannter Weise getrennt von der Prepolymerzusammensetzung gehalten und erst unmittelbar vor oder bei der Ausbringung zugesetzt. Die Verfahren hierzu sind vielfach beschrieben und dem Fachmann bekannt, ebenso dafür geeignete Zweikomponenten-Druckdosen mit einem separaten Behälter für die zweite Komponente.

Als zweite Komponente kommen insbesondere übliche Polyole in Frage, insbesondere Glykol, Glycerin und Butandiol. Zur Beschleunigung der Aushärtungsreaktion kann es zweckmäßig sein, dieser zweiten Komponente einen üblichen Katalysator zuzusetzen, beispielsweise Zinndioctoat, Kobaltnaphthenat und -octoat, Dibutylzinndilaurat, Metall-, insbesondere Eisenacetonylacetat, DABCOkrist. und N-Methyl-2-azanorbornan. Weitere Katalysatoren sind Triethylendiamin, Trimethylaminoethylpiperazin, Pentamethyldiethylentriamin, Tetramethyliminobispropylamin, Bis(dimethylaminopropyl)-N-isopropanolamin. Ferner geeignet sind heteroaromatische Amine, wie sie beispielsweise in der DE-A-42 15 647 genannt sind.

Die Erfindung betrifft weiterhin die Verwendung von Polyisocyanat-Prepolymeren auf Basis von Hexamethylen-1,6-diisocyanaten und seinen Oligomerisierungsprodukten für die Herstellung von Prepolymerkomponenten für Polyurethandämmschäume, insbesondere 1,5K-Schäume, wobei diese HDI-Prepolymere allein oder in Verbindung mit geeigneten anderen Polyisocyanaten, vorzugsweise solchen auf Biuret- und TDI-Basis, zum Einsatz kommen.

Die erfindungsgemäßen Prepolymerzusammensetzungen sind für Dämmzwecke geeignet. Sie haben sich außerdem als besonders geeignet für die Herstellung von Sprühklebern erwiesen, d. h. Klebern auf Polyurethanbasis, die aus Aerosoldosen unter Zuhilfenahme von Luft als ergänzendem Zerstäubungsmedium versprüht werden können. Diese Kleber können vorteilhaft zum Verkleben von Dämmatten, auch auf Polyurethanbasis, untereinander und mit einem Untergrund eingesetzt werden.

Die Erfindung betrifft schließlich die Verwendung von flüssigem Polybutadien, von Paraffinen und von Entschäumern, wie oben definiert, als Zusatz zu Isocyanat-Prepolymerzusammensetzungen für Polyurethandämmschäume zur Steuerung der Zellöffnung und der Dimensionsstabilität. Die Erfindung betrifft ferner Druckdosen zur Ausbringung von Polyurethandämmschäumen mit einer Prepolymerzusammensetzung und gegebenenfalls einer davon getrennten Polyolkomponente, wie vorstehend beschrieben.

Abgesehen von der bereits erwähnten Dimensionsstabilität der mit dem Zusatz an flüssigem Polybutadien hergestellten erfindungsgemäßen Prepolymerzusammensetzung besitzt diese als weiteren Vorteil, daß sie im wesentlichen frei von Chlor und Brom hergestellt und feuerhemmend eingestellt werden kann, ohne daß übliche halogenhaltige Flammschutzmittel zugesetzt werden müssen. Dies heißt, daß auf den Zusatz von Flammschutzmitteln für B2-Schäume nach DIN 4102 weitgehend oder vollständig verzichtet werden kann. Dies ist insbesondere dann der Fall, wenn die Zusammensetzung Phosphor enthaltende Verdünner oder Weichmacher (Viskositätsregulierer) enthält, beispielsweise Triethylphosphat. Eine entsprechende Wirkung haben N-haltige Zusätze und Pflanzenöle, etwa Ricinusöl. Falls erforderlich, können die Prepolymerzusammensetzungen auch im wesentlichen halogenfrei eingestellt werden, d. h. neben halogenhaltigen Flammschutzmitteln kann auch auf Fluorkohlenwasserstoffe als Treibgase verzichtet werden. In diesem Fall ist es ausreichend, daß die Treibgaskomponente Propan, Butan, Dimethylether und/oder CO₂ enthält.

Es hat sich gezeigt, daß diese flammhemmenden Eigenschaften insbesondere den Trialkyl- und Triarylphosphaten und -phosphonaten zukommen. Genannt werden können Diphenylkresylphosphat, Triphenylphosphat, Triethylphosphat, Dimethylmethanphosphonat, und dergleichen. Ferner können genannt werden 2-Ethylhexyldiphenylphosphat und Phosphorsäure-1,3-phenylentetraphenylester, welche unter den Bezeichnungen Fosflex 362 und Fyroflex RDP im Handel erhältlich sind. Solche Phosphate und Phosphonate können in einer Menge von 5 bis 40 Gew.-%, bezogen auf das Prepolymer, in der Prepolymerzusammensetzung zugegen sein. Sie haben den Vorteil, daß sie das in der Prepolymerzusammensetzung austarierte Gleichgewicht aus Prepolymer, Treibmittel und Verdünnern nicht stören, sondern vielmehr stabilisieren, während herkömmliche halogenhaltige Flammschutzmittel in dieses Gleichgewicht eingreifen und nur zu etwa 12 bis 14 Gew.-% zugegen sein können.

Die erfindungsgemäße Prepolymerzusammensetzung wird auf dem Fachmann an und für sich bekannte Weise hergestellt, wobei bei Verwendung von monomerarmem Prepolymer dieses als solches in den Druckbehälter gegeben wird oder dort entsteht. Dem Prepolymer wird dann das flüssige Polybutadien, etwa in Abmischung mit einem Tensid und emulgiert in einem hydroxyhaltigen Öl, beispielsweise Ricinusöl, zugesetzt. Das hydroxylhaltige Öl bzw. Ricinusöl dient gleichzeitig der Feineinstellung des NCO-Gehalts des Prepolymeren und der Herabsetzung des Monomergehalts. Anschließend werden die Zusatzstoffe, wie Flammschutzmittel, Stabilisatoren, Weichmacher, Katalysatoren, etc. zugesetzt, wonach der Druckbehälter (Aerosoldose) verschlossen und das Treibmittel aufgedrückt wird.

Die Erfindung wird durch die nachfolgenden Beispiele erläutert.

### Beispiel 1

Desmodur N 3400, ein aliphatisches Polyisocyanat auf HDI-Basis mit etwa 20 Gew.-% NCO, wird unter Schutzgas mit einer Polyolkomponente versetzt. Diese Polyolkomponente besteht aus einem Polyesterol mit einer OH-Zahl von 239 (Ixol M 125 von Solvay), das zugleich flammhemmende Eigenschaften hat, einem Weichmacher (Trismonochlorisopropylphosphat, TMCP), einem üblichen Stabilisator (Tegostab B 1048) und Katalysatoren (Texacat DMDEE, 2,2-Dimorpholinodiethylether; Thancat DMP, Dimethylpiperazin). Die Temperatur wird bei der Zugabe sorgfältig kontrolliert.

Der zum Einsatz kommende Vernetzer besteht aus Monoethylenglykol, dem ein Reaktionsbeschleuniger (Katalysator) zugesetzt ist.

Unter ständigem Rühren wird die gewünschte Menge des zuvor beschriebenen Gemisches in einen feuchtigkeitsfreien Druckbehälter gegeben und unter Einbringung einer Patrone mit der zweiten Komponente (Vernetzer), mit einem mit Ventil versehenen Dom verschlossen. Nach dem Verschließen wird eine abgestimmte Menge Treibgas aufgedrückt. Zweckmäßigerweise werden die einzelnen Komponente der Treibgasmischung nacheinander aufgedrückt und gegebenenfalls in einem zweiten Durchgang noch einmal aufgefüllt. Besonders geeignet ist eine Mischung aus Dimethylether in Verbindung mit einem oder mehreren Fluorkohlenwasserstoffen (R 152a und R 134a).

Nachstehend sind monomerfrei eingestellte Prepolymerzusammensetzungen und Füllanteile für einen Druckbehälter mit einem Füllgrad von 75 % angegeben. Die Mischungen ergeben einen dimensionsstabilen Schaum mit guten Dämmeigenschaften. Der Gehalt an Restmonomer der Zusammensetzung liegt unter 0,5 Gew.-%. Der Schaum kann insbesondere auch als Sprühkleber verwandt werden.

| Bestandteil | Gew.-Teile |
|---|---|
| Ricinusöl | 370 |
| Weichmacher (Levagard PP) | 420 |
| Flammschutzmittel (Ixol M 125) | 170 |
| Stabilisator (Tegostab B 1048) | 30 |
| Texacat DMDEE | 5 |
| Thancat DMP | 5 |
| | |
| Polyolkomponente 1 | 1000 |
| | |
| Polyolkomponente 1 | 142 g |
| Desmodur N 3400 | 181 g |
| Treibmittel R 134a | 30 g |
| R 152a | 60 g |
| Dimethylether (DME) | 10 g |
| | |
| Vernetzer: Monoethylenglykol | 12 g |
| Katalysator | 5 g |
| | |
| Insgesamt | 440 g |
| Gasanteil (Gew.-%) | 23 % |

### Beispiele 2 und 3

Erfindungsgemäße Prepolymerzusammensetzungen unter Verwendung herkömmlicher Ausgangs-Isocyanate wurden nach folgenden Rezepturen analog zum Beispiel 1 hergestellt. Die Zusammensetzungen ergeben einen Dämmschaum mit guter Dimensionsstabilität und guten Dämmeigenschaften. Der Gehalt an Restmonomer in der Zusammensetzung liegt deutlich unter 0,5 Gew.-%.

Es bezeichnen Desmodur N 75 ein Polyisocyanat mit einem NCO-Gehalt von 16,4 Gew.-% und Desmodur L 75 ein Polyisocyanat mit einem NCO-Gehalt von 13 Gew.-%. Ersteres ist ein biuretgruppenhaltiges Polyisocyanat in 75 %iger Lösung, letzteres ein Polyaddukt aus TDI und TMP in 75 %iger Lösung. Tego IMR 830 bezeichnet eine 10 %ige Emulsion eines flüssigen Polybutadiens mit einem Molekulargewicht von etwa 3000 mit einem Tensid als Emulgator (Gewichtsverhältnis 80/20; erhältlich von der Firma Goldschmidt) in Ricinusöl mit einer OH-Zahl von 160.

| Bestandteil | Bsp. 2 | Bsp. 3 |
|---|---|---|
| | Gew.-Teile | |
| Ricinusöl | 320 | 320 |
| Weichmacher | 420 | 420 |
| Flammschutzmittel | 170 | 170 |
| (Ixol M 125) | | |
| Tego IMR 830 10 % | 50 | 50 |
| Tegostab B 1048 | 30 | 30 |
| (Stabilisator) | | |
| Katalysatoren | | |
| Texacat DMDEE | 5 | 5 |
| Thancat DMP | 5 | 5 |
| | | |
| Polyolkomponente 2/3 | 1000 | 1000 |
| | | |
| Polyolkomponente 2/3 | 120 g | 120 g |
| Desmodur N 3400 | 150 g | 150 g |
| Desmodur N 75 | 50 g | |
| Desmodur L 75 | | 50 g |
| Treibmittel R 134a | 30 g | 30 g |
| R 152a | 60 g | 60 g |
| DME | 10 g | 10 g |
| | | |
| Vernetzer: Ethylenglykol | 12 g | 12 g |
| Katalysator | 5 g | 5 g |
| | | |
| Insgesamt | 437 g | 437 g |
| Gasanteil (Gew.-%) | 23 | 23 |

### Beispiel 4

Eine erfindungsgemäße Prepolymerzusammensetzung wurde nach folgender Rezeptur analog zu Beispiel 1 hergestellt. Die Zusammensetzung ergeben einen Dämmschaum mit guter Dimensionsstabilität und guten Dämmeigenschaften. Der Gehalt an Restmonomer in der Zusammensetzung liegt unter 0,5 Gew.-%.

| Bestandteil | Gew.-Teile |
|---|---|
| Ricinusöl | 320 |
| Weichmacher (Levagard PP) | 370 |
| Lösungsmittel (Propylencarbonat) | 60 |
| Flammschutzmittel (Ixol M 125) | 170 |
| Tego IMR 830 (10 %) | 50 |
| (Zellregulanz) | |
| Stabilisator (Tegostab B 1048) | 30 |
| Katalysatoren | |
| Texacat DMDEE | 5 |
| Thancat DMP | 5 |
| | |
| Polyolkomponente 4 | 1000 |
| Polyolkomponente 4 | 110 g |
| Desmodur N 75 | 50 g |
| Desmodur N 3400 | 150 g |
| Treibmittel R 134a | 30 g |
| R 152a | 60 g |
| DME | 10 g |
| | |
| Vernetzer: Ethylenglykol | 13 g |
| Katalysator (Thancat AN 10, Fe-Acetonylacetat) | 4 g |
| | |
| Insgesamt | 427 g |
| Gasanteil (Gew.-%) | 23 |

### Beispiele 5 und 6

Erfindungsgemäße Prepolymerzusammensetzungen wurden nach folgenden Rezepturen analog zu Beispiel 1 hergestellt. Die Zusammensetzungen ergeben einen Dämmschaum mit guter Dimensionsstabilität und guten Dämmeigenschaften. Der Gehalt an Restmonomer liegt unter 0,5 Gew.-%.

| Bestandteile | Bsp. 5 | Bsp. 6 |
|---|---|---|
| Polyolkomponente 2/3 | 110 g | 110 g |
| Desmodur N 3400 | 100 g | 100 g |
| Desmodur DA | 100 g | 100 g |
| Treibmittel R 134a | 30 g | 30 g |
| R 152a | 60 g | 60 g |
| DME | 10 g | 10 g |
| | | |
| Vernetzer: Ethylenglykol | 13 g | 13 g |
| Katalysator (Thancat AN 10,Dabco T-9) | 4 g | 4 g |
| | | |
| Insgesamt | 427 g | 427 g |

### Beispiele 7 und 8

Erfindungsgemäße Prepolymerzusammensetzungen wurden nach folgenden Rezepturen analog zu Beispiel 1 hergestellt. Die Zusammensetzungen ergeben einen Dämmschaum mit guter Dimensionsstabilität und guten Dämmeigenschaften. Der Gehalt an Restmonomer in der Zusammensetzung liegt unter 0,5 Gew.-%.

Die Zusammensetzung enthält ein Extendermineral zur Förderung der Dimensionsstabilität in Form von Talk (Finntalc M-15) oder Kalciumcarbonat (Ultracarb U-5).

| Bestandteile | Bsp. 7 | Bsp. 8 |
|---|---|---|
| Ricinusöl | 320 | 320 |
| Weichmacher | 325 | 325 |
| Flammschutzmittel | 150 | 150 |
| Tego IMR 830 (10 %) | 50 | 50 |
| Netzadditiv (Byk 160) | 5 | 5 |
| Thixotropierer (Aerosil 200) | 10 | 10 |
| Extendermineral Finntalc M-15 | 100 | |
| Ultracarb U-5 | | 100 |
| Tegostab B 1048 | 30 | 30 |
| Texacat DMDEE | 5 | 5 |
| Thancat DMP | 5 | 5 |
| | | |
| Polyolkomponente 7/8 | 1000 | 1000 |
| | | |
| Polyolkomponente 7/8 | 142 g | 142 g |
| Desmodur N 3400 | 181 g | 181 g |
| Treibmittel R 134a | 30 g | 30 g |
| R 152a | 60 g | 60 g |
| DME | 10 g | 10 g |
| | | |
| Vernetzer: Ethylenglykol | 12 g | 12 g |
| Katalysator | 5 g | 5 g |
| | | |
| Insgesamt | 440 g | 440 g |
| NCO-Überschuß (Gew.-%) | 4,01 | 4,01 |

Bei den Bezeichnungen "Desmodur", "Tego", "Aerosil", "Finntalc" "Ultracarb", "Tegostab", Texacat", "Thancat", "Levagard" und "Ixol" handelt es sich um Warenzeichen.

## Patentansprüche

1. Prepolymerzusammensetzung zur Erzeugung von Polyurethandämmschäumen aus Druckbehältern, welche aus einer Prepolymerkomponente mit wenigstens einem Polyurethan-Prepolymer (PU-Prepolymer), erhältlich durch Umsetzung von Polyisocyanaten mit hydroxylgruppenhaltigen Verbindungen, mit einem Gehalt an NCO-Gruppen von 4 bis 20 Gew.-% und üblichen Zusatzstoffen, sowie einer Treibgaskomponente besteht, gekennzeichnet durch die Verwendung eines PU-Prepolymers auf Basis von Hexamethylen-1,6-diisocyanat, Tolylendiisocyanat oder Isophorondiisocyanat allein, in Mischung oder in Abmischung mit anderen Polyisocyanaten, wobei der Gehalt an monomerem Isocyanat weniger als 2 Gew.-%, bezogen auf die Prepolymerkomponente, beträgt.

2. Prepolymerzusammensetzung nach Anspruch 1 oder 2, gekennzeichnet durch einen Gehalt an flüssigen Polybutadien von 0,02 bis 1 Gew.-%.

3. Prepolymerzusammensetzung nach Anspruch 2, dadurch gekennzeichnet, daß das flüssige Polybutadien etwa 75 % 1,4-cis-Doppelbindungen, etwa 24 % 1,4-trans-Doppelbindungen und etwa 1 % Vinyl-Doppelbindungen enthält, ein Molekulargewicht, bestimmt durch Dampfdruckosmose, von etas 3000 und eine Viskosität bei 20°C von etwa 3000 mPa.s hat.

4. Prepolymerzusammensetzung nach einem der vorstehenden Ansprüche, gekennzeichnet durch einen Gehalt an Paraffinöl oder Entschäumer von 0,01 bis 2 Gew.-%, bezogen auf die Prepolymerkomponente.

5. Prepolymerzusammensetzung nach einem der vorstehenden Ansprüche, gekennzeichnet durch einen Treibgasgehalt von 5 bis 40 Gew.-%.

6. Prepolymerzusammensetzung nach einem der vorstehenden Ansprüche, dadurch gekennzeichnet, daß die Treibgaskomponente Propan, Butan und/oder Dimethylether enthält.

7. Prepolymerzusammsetzung nach einem der vorstehenden Ansprüche, dadurch gekennzeichnet, daß die Treibgaskomponente Fluorkohlenwasserstoff, insbesondere R 125, R 134a, R 143 und/oder R152a, enthält.

8. Prepolymerzusammensetzung nach einem der vorstehenden Ansprüche, gekennzeichnet durch eine Anfangs-Gebrauchsviskosität des PU-Prepolymers bei 20°C von 5000 bis 20000 mPa.s.

9. Prepolymerzusammensetzung nach Anspruch 8, gekennzeichnet durch eine Anfangs-Gebrauchsviskosität des PU-Prepolymers von 8000 bis 15000 mPa.s.

10. Prepolymerzusammensetzung nach einem der vorstehenden Ansprüche, dadurch gekennzeichnet, daß das Polyisocyanat eines auf Basis von Hexamethylen-1,6-diisocyanat allein oder in Abmischung mit anderen monomerarm eingestellten Polyisocyanat ist.

11. Verwendung der Prepolymerzusammensetzung nach einem der vorstehenden Ansprüche zur Erzeugung von Polyurethandämmschäumen.

12. Verwendung nach Anspruch 11, dadurch gekennzeichnet, daß die Prepolymerzusammensetzung zur Erzeugung von Übergangs schäumen zwischen 1K- und 2K-Dämmschäumen bestimmt ist.

13. Verwendung der Prepolymerzusammensetzung nach einem der Ansprüche 1 bis 10 zur Erzeugung von Sprühklebern auf Polyurethanbasis.

14. Druckdose zur Ausbringung von 1K-Polyurethandämmschäumen, dadurch gekennzeichnet, daß sie Prepolymerzusammesetzung nach einem der Ansprüche 1 bis 10 enthält.

## Claims

1. A prepolymer composition for producing polyurethane insulating foams from pressure tanks which consists of a prepolymer component with at least one polyurethane prepolymer (PU prepolymer) obtainable by reaction of polyisocyanates with hydroxy group containing compounds, with a content of NCO groups of 4 to 20 wt% and usual additives, as well as a propellant component, characterized by the use of a PU prepolymer based on hexamethylene-1,6-diisocyanate, tolylene diisocyanate or isophorone diisocyanate, alone or mixed or in admixture with other polyisocyanates, the content of monomeric isocyanate being less than 2 wt%, based on the prepolymer component.

2. The prepolymer composition of claim 1, characterized by a content of liquid polybutadiene of 0.02 to 1 wt%.

3. The prepolymer composition of claim 2, characterized in that the liquid polybutadiene contains about 75% 1,4-cis double bonds, about 24% 1,4-trans double bonds and about 1% vinyl double bonds, has a molecular weight, determined by vapor-pressure osmosis, of about 3000 and a viscosity at 20° C of about 3000 mPa.s.

4. The prepolymer composition of any of the above claims, characterized by a content of paraffin oil or defoamer of 0.01 to 2 wt%, based on the prepolymer component.

5. The prepolymer composition of any of the above claims, characterized by a propellant content of 5 to 40 wt%.

6. The prepolymer composition of any of the above claims, characterized in that the propellant component contains propane, butane and/or dimethylether.

7. The prepolymer composition of any of the above claims characterized in that the propellant component contains fluorocarbon, in particular R 125, R 134a, R 143 and/or R 152a.

8. The prepolymer composition of any of the above claims, characterized by an initial service viscosity of the PU prepolymer at 20 °C of 5000 to 20000 mPa.s.

9. The prepolymer composition of claim 8, characterized by an initial service viscosity of the PU prepolymer of 8000 to 15000 mPa.s.

10. The prepolymer composition of any of the above claims, characterized by a polyisocyanate based on hexamethylene-1,6-diisocyanate above or in admixture with other polyisocyanate with reduced monomer content.

11. The use of the prepolymer composition of one of the above claims for producing polyurethane insulating foams.

12. The use of claim 1, characterized in that the prepolymer composition is intended for producing transition stages of 1C to 2C polyurethane insulating foams.

13. The use of the prepolymer composition of any of claims 1 to 10 for producing spray adhesives based on polyurethane.

14. A pressure can for discharging 1C polyurethane insulating foams, characterized in that it contains a prepolymer compossition of any of claims 1 to 10.

## Revendications

1. Composition prépolymère pour la production de mousses isolantes de polyuréthane à partir de récipients sous pression, laquelle est constituée d'un constituant prépolymère avec au moins un prépolymère de polyuréthane (prépolymère PU), obtenu par réaction de polyisocyanates avec des composés contenant des groupes hydroxyle, avec une teneur en groupes NCO de 4 à 20% en poids et des additifs classiques, ainsi que d'un constituant de gaz propulseur, caractérisée par l'utilisation d'un prépolymère PU à base de 1,6-diisocyanate d'hexaméthylène, de diisocyanate de tolylène ou de diisocyanate d'isophorone seuls, en mélange ou en mélange avec d'autres polyisocyanates, la teneur en isocyanate monomère étant inférieure à 2% en poids, rapportés au constituant prépolymère.

2. Composition prépolymère selon la revendication 1 ou 2, caractérisée par une teneur en polybutadiène liquide de 0,02 à 1% en poids.

3. Composition prépolymère selon la revendication 2, caractérisée en ce que le polybutadiène liquide contient environ 75% de double liaison 1,4-cis, environ 24% de double liaison 1,4-trans et environ 1% de double liaison vinyle, présente un poids moléculaire, déterminé par osmose à tension de vapeur, d'environ 3 000 et une viscosité à 20°C d'environ 3 000 mPa.s.

4. Composition prépolymère selon l'une quelconque des revendications précédentes, caractérisée par une teneur en huile de paraffine ou en agent antimoussant de 0,01 à 2% en poids, rapportés au constituant prépolymère.

5. Composition prépolymère selon l'une quelconque des revendications précédentes, caractérisée par une teneur en gaz propulseur de 5 à 40% en poids.

6. Composition prépolymère selon l'une quelconque des revendications précédentes, caractérisée en ce que le constituant de gaz propulseur contient du propane, du butane et/ou du diméthyléther.

7. Composition prépolymère selon l'une quelconque des revendications précédentes, caractérisée en ce que le constituant de gaz propulseur contient un fluorohydrocarbure, en particulier R 125, R 134a, R 143 et/ou R 152a.

8. Composition prépolymère selon l'une quelconque des revendications précédentes, caractérisée par une viscosité initiale à l'utilisation du prépolymère PU à 20°C de 5 000 à 20 000 mPa.s.

9. Composition prépolymère selon la revendication 8, caractérisée par une viscosité initiale à l'utilisation du prépolymère PU de 8 000 à 15 000 mPa.s.

10. Composition prépolymère selon l'une quelconque des revendications précédentes, caractérisée en ce que le polyisocyanate est un polyisocyanate à base de 1,6-diisocyanate d'hexaméthylène seul ou en mélange avec d'autres polyisocyanates à faible ajustement en monomères.

11. Utilisation de la composition prépolymère selon l'une quelconque des revendications précédentes pour la production de mousses isolantes de polyuréthane.

12. Utilisation selon la revendication 11, caractérisée en ce que la composition prépolymère est définie pour la production de mousses de transition comprises entre des mousses isolantes 1K et 2K.

13. Utilisation de la composition prépolymère selon l'une quelconque des revendications 1 à 10 pour la production de colles de pulvérisation à base de polyuréthane.

14. Récipient sous pression pour la production de mousses isolantes de polyuréthane 1K, caractérisé en ce qu'il contient une composition prépolymère selon l'une quelconque des revendications 1 à 10.
